Europäisches Patentamt

European Patent Office

Office européen des brevets

(19)

(11) Numéro de publication: **0 263 363 B1**

(12) **FASCICULE DE BREVET EUROPEEN**

(45) Date de publication de fascicule du brevet: **22.04.92**  (51) Int. Cl.⁵: $G02B\ 6/44$

(21) Numéro de dépôt: **87113974.7**

(22) Date de dépôt: **24.09.87**

(54) **Jonc cylindrique pour cable optique.**

(30) Priorité: **26.09.86 FR 8613454**

(43) Date de publication de la demande:
**13.04.88 Bulletin  88/15**

(45) Mention de la délivrance du brevet:
**22.04.92 Bulletin  92/17**

(84) Etats contractants désignés:
**CH DE FR GB IT LI NL SE**

(56) Documents cités:
**FR-A- 2 497 964**
**FR-A- 2 534 385**
**FR-A- 2 546 636**
**FR-A- 2 562 272**
**GB-A- 1 470 890**

(73) Titulaire: **FILOTEX S.A.**
**140/146 rue Eugène Delacroix**
**F-91210 Draveil(FR)**

(72) Inventeur: **Thominet, Gérard**
**49 rue Jules Perlaux**
**F-08170 Fumay(FR)**
Inventeur: **Raimbeaux, Jean-Michel**
**Le Cheval Blanc**
**F-08230 Rocroi(FR)**

(74) Mandataire: **Weinmiller, Jürgen et al**
**Lennéstrasse 9 Postfach 24**
**W-8133 Feldafing(DE)**

## Description

La présente invention concerne un jonc cylindrique pour câble optique à structure libre, comportant une cavité radiale ouverte vers l'extérieur prévue pour loger librement au moins une fibre optique, renforcé par un couple d'éléments porteurs cylindriques noyés dans son épaisseur, disposés symétriquement par rapport à la cavité radiale, les centres des sections droites des éléments porteurs étant dans toute section droite du jonc sur un diamètre de cette dernière.

La demanderesse a déjà proposé dans le document FR-A-2534385 un câble optique à structure libre, notamment monovoie, comportant un jonc cylindrique creusé d'une rainure longitudinale dans laquelle sont logées librement une ou plusieurs fibres optiques, et, dans un seul des plans passant par l'axe du câble, un couple d'éléments porteurs noyés dans l'épaisseur du jonc, disposés longitudinalement et symétriquement par rapport à cet axe, le plan passant par les éléments porteurs traversant la rainure longitudinale, dont la profondeur est notablement supérieure au rayon du jonc, afin de permettre le déplacement de la fibre optique (ou des fibres optiques) de part et d'autre de l'axe de pliage du câble. Le point faible d'un tel jonc est sa tenue médiocre à l'écrasement.

La demanderesse a certes proposé dans le document FR-A-2562272 de fermer la partie supérieure de la rainure par une languette pour améliorer la résistance du jonc à l'écrasement. Mais cela complique la fabrication du jonc et nécessite une languette de dimensions étroitement adaptées à celles de la rainure.

On a aussi proposé des joncs pour câbles optiques à élément porteur central, munis sur leur pourtour d'une pluralité de rainures hélicoïdales. Mais leur fabrication et la pose des fibres dans les rainures hélicoïdales sont plus complexes et nécessitent une plus grande précision, et la protection des fibres optiques contre des contraintes radiales n'est pas parfaite.

La présente invention a pour but de procurer un jonc cylindrique pour câble optique qui présente une cavité radiale de grandes dimensions assurant à la fibre optique, ou aux fibres optiques, un grand degré de liberté à l'intérieur de la cavité radiale, et permettant de les disposer dans cette cavité avec une grande surlongueur par rapport à la longueur du jonc lui-même, de façon qu'elles soient à l'abri des risques de casse sous l'effet des contraintes longitudinales pouvant s'exercer sur le câble optique final pendant ses manipulations, sa pose et son utilisation. Elle a encore pour but de permettre l'obtention d'un câble optique présentant une résistance aux contraintes axiales ou radiales pouvant apparaître lors de ses manipulations et de sa pose supérieure à celle procurée par les câbles à élément porteur axial unique et pluralité de rainures hélicoïdales.

Le jonc cylindrique selon l'invention est caractérisé en ce que sa cavité radiale suit une trajectoire hélicoïdale sur le pourtour du jonc et en ce que les éléments porteurs suivent à l'intérieur du jonc des trajectoires hélicoïdales de même pas que celui de la cavité radiale.

Il répond en outre de préférence à au moins l'une des caractéristiques suivantes :
- La profondeur de la cavité radiale est égale au rayon du jonc augmenté de la valeur du rayon de la fibre optique, de façon que celle-ci, lorsqu'elle est disposée au fond de la cavité, soit coaxiale au jonc.
- La profondeur de la cavité radiale est au plus égale au rayon du jonc.
- La cavité radiale est de section droite en forme de V ouvert vers l'extérieur et de fond arrondi.

Lorsque la cavité radiale est de profondeur au plus égale au rayon du jonc augmenté de la valeur du rayon de la fibre optique, le jonc présente une résistance à l'écrasement notablement supérieure à celle d'un jonc dont la cavité radiale présenterait une profondeur supérieure.

Il est décrit ci-après, à titre d'exemples et en référence aux figures du dessin annexé, des joncs cylindriques pour câble optique selon l'invention.

La figure 1 représente en perspective avec coupe transversale un jonc à cavité radiale de section droite en forme de V ouvert vers l'extérieur, et de profondeur supérieure au rayon du jonc.

La figure 2 représente en perspective avec coupe transversale un jonc à cavité radiale de section droite en forme de V ouvert vers l'extérieur, mais de profondeur inférieure au rayon du jonc.

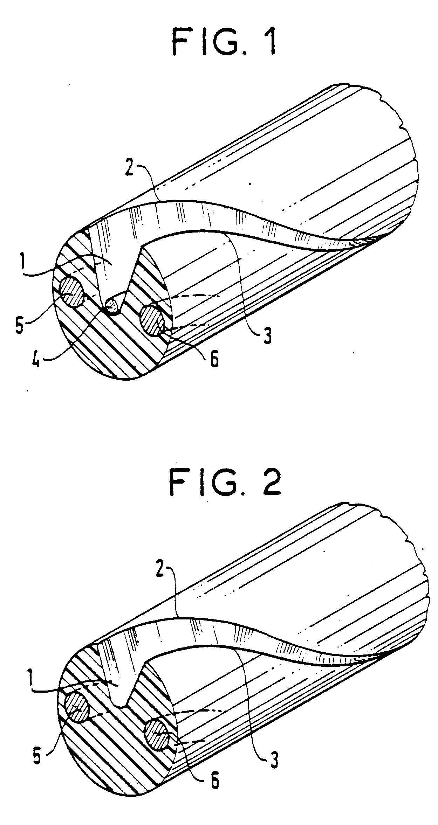

Dans la figure 1, le jonc cylindrique comporte une rainure hélocoïdale 1 à bords 2 et 3, de section droite en forme de V ouvert vers l'extérieur et à fond arrondi. La profondeur de la rainure est égale à la somme du rayon du jonc et du rayon de la fibre optique 4, reposant sur le fond de la rainure. L'axe de cette fibre optique coïncide donc avec l'axe du jonc. Cette position correspond à la longueur minimale possible de la fibre optique, la longueur maximale de cette fibre sans vrille étant obtenue lorsqu'elle est à la périphérie de la rainure. Cette structure du jonc assure, pour un diamètre de jonc et un pas donnés, le maximum de liberté à la fibre optique.

Les deux éléments porteurs 5 et 6 ont leur centres sur un même diamètre du jonc, et symétriques par rapport au diamètre perpendiculaire déterminant l'axe de la rainure dans le plan de coupe. Ils assurent après mise en place des fibres optiques et de la gaine une résistance mécanique suffisante au câble. Ces deux éléments doivent présenter un module d'élasticité à la traction élevé et un bon module d'élasticité à la compression, pour assurer en particulier une bonne tenue dimensionnelle du câble à basse température. Ces éléments porteurs peuvent être métalliques ou non métalliques, mais dans certains il peut être avantageux d'avoir recours à des éléments relativement souples, par exemple en fibres de polyamide aromatique ou de verre non imprégnées. La tenue du câble à basse température devra alors être assurée par des renforts extérieurs. Afin d'assurer une bonne stabilité mécanique de câble, ces deux éléments porteurs doivent être de préférence mis en place sans torsion, sauf pour des applications spéciales.

Le jonc représenté en figure 2 comporte une rainure hélicoïdale moins profonde que celui de la figure 1. Sa profondeur est inférieure au rayon du jonc. Il présente une meilleure résistance à l'écrasement.

Les positions des éléments porteurs 5, 6 sont inchangées, leurs centres étant disposés symétriquement sur un diamètre du jonc perpendiculaire au diamètre formant axe de symétrie de la rainure dans le plan de coupe.

Bien entendu, dans les différentes structures du jonc décrites ci-dessus, la rainure peut comporter une ou plusieurs fibres optiques, assemblées ou non, et être remplie ou non d'une matière d'étanchéité. Le jonc peut être réalisé en différents matériaux thermoplastiques. Il peut être complété par des renforts et des gaines diverses, afin de constituer un câble de télécommunications.

Pour la fabrication d'un jonc selon l'invention, les deux éléments porteurs sont conditionnés sur des tourets entraînés en rotation autour de l'axe du câble, en synchronisme avec un organe de réception tournante. L'outillage d'extrusion (guide et filière) reste fixe.

Dans certains cas, il peut être utile de disposer une chenille de traction avant l'organe de réception tournante.

Bien entendu les câbles à jonc rainuré dont la profondeur de la rainure est supérieure à la valeur du rayon du jonc augmentée du rayon de la fibre optique, tels que décrits dans le document FR-A-2.562.272, entrent également dans le cadre de la présente demande lorsque cette rainure suit une trajectoire hélicoïdale de même pas que celui des éléments porteurs contenus dans le jonc.

**Revendications**

1. Jonc cylindriq ue pour câble optique à structure libre, comportant une cavité radiale ouverte vers l'extérieur (1) prévue pour loger librement au moins une fibre optique (4), renforcé par un couple d'éléments porteurs cylindriques (5, 6) noyés dans son épaisseur, disposés symétriquement par rapport à la cavité radiale, les centres des sections droites des éléments porteurs étant dans toute section droite du jonc sur un diamètre de cette dernière, caractérisé en ce que la cavité radiale suit une trajectoire hélicoïdale sur le pourtour du jonc et en ce que les éléments porteurs (5, 6) suivent à l'intérieur du jonc des trajectoires hélicoïdales de même pas que celui de la cavité radiale.

2. Jonc cylindrique selon l'une des revendications 1, caractérisé en ce que la profondeur de la cavité radiale (1, fig.1) est égale au rayon du jonc augmenté de la valeur du rayon de la fibre optique (4), de façon que celle-ci soit coaxiale au jonc lorsqu'elle est disposée au fond de la cavité.

3. Jonc cylindrique selon la revendication 1, caractérisé en ce que la profondeur de la cavité radiale est au plus égale au rayon du jonc.

4. Jonc cylindrique selon les revendications 1 ou 2, caractérisé en ce que la cavité radiale est de section droite en forme de V ouvert vers l'extérieur et de fond arrondi.

**Claims**

1. Loose structure optical cable cylindrical support comprising an outwardly open radial cavity (1) adapted to accommodate loosely at least one optical fibre (4), reinforced by a pair of cylindrical bearer members (5, 6) embedded in its thickness, disposed symmetrically relative to the radial cavity, the centres of the right cross-sections of the bearer members being in any right cross-section of the support on a diameter of the latter, characterised in that the radial cavity follows a helical path on the circumference of the support and in that the bearer members (5, 6) follow within the support helical paths with the same pitch as the radial cavity.

2. Cylindrical support according to claim 1 characterised in that the depth of the radial cavity (1, fig 1) is equal to the radius of the support plus the radius of the optical fibre (4), so that the latter is coaxial with the support when it is at the bottom of the cavity.

3. Cylindrical support according to claim 1 characterised in that the depth of the radial cavity is at most equal to the radius of the support.

4. Cylindrical support according to claim 1 or claim 2 characterised in that the radial cavity has a V-shape right cross-section outwardly open and with a rounded bottom.

**Patentansprüche**

1. Zylindrischer Kern für ein Lichtleitkabel mit lose legbaren Fasern, wobei der Kern eine radial nach außen hin offene Furche (1) zur losen Aufnahme mindestens einer Lichtleitfaser (4) aufweist und mit einem Paar von zylindrischen Tragelementen (5, 6) verstärkt ist, die in den Kern eingebettet sind und relativ zur Radialfurche symmetrisch angeordnet sind, wobei die Mittelpunkte der Querschnitte der Tragelemente in jedem beliebigen Querschnitt des Kerns auf einem Durchmesser desselben liegen, dadurch gekennzeichnet, daß die Radialfurche einer schraubenförmigen Bahn über den Umfang des Kerns folgt und daß die Tragelemente (5, 6) im Inneren des Trägers schraubenförmigen Bahnen folgen, die die gleiche Steigung wie die Bahn der Radialfurche besitzen.

2. Zylindrischer Kern nach Anspruch 1, dadurch gekennzeichnet, daß die Tiefe der Radialfurche (1, Figur 1) dem Halbmesser des Kerns, vergrößert um der Wert des Halbmessers der Lichtleitfaser (4), entspricht, derart, daß diese koaxial zum Kern verläuft, wenn sie am Grunde der Furche angeordnet ist.

3. Zylindrischer Kern nach Anspruch 1, dadurch gekennzeichnet, daß die Tiefe der Radialfurche höchstens dem Halbmesser des Kerns entspricht.

4. Zylindrischer Kern nach Anspruch 1 oder 2, dadurch gekennzeichnet, daß die Radialfurche einen Querschnitt in Form eines V besitzt, der sich nach außerhalb der Furche öffnet und einen abgerundeten Grund aufweist.

# FIG. 1

# FIG. 2